# EUROPEAN PATENT APPLICATION

(11) **EP 4 818 371 A1**
(43) Date of publication of application: **07.10.2026**
(21) Application number: 26159545.8
(22) Date of filing: 19.02.2026
(51) Int. Cl.: C25B 9/60, C25B 1/04, C25B 9/23, C25B 9/75, C25B 9/77, H01F 7/02

(54) **COMPONENTS FOR ELECTROLYTIC APPARATUS AND ELECTROLYTIC APPARATUS**

(30) Priority: 03.04.2025 CN 202510417030
(71) Applicant: Robert Bosch GmbH, 70442 Stuttgart (DE)
(72) Inventor: Hao, Xiaogang, Shanghai, 200335 (CN); XIE, Xu, Shanghai, 200335 (CN); NI, Yang, Shanghai, 200335 (CN)

(57) **Abstract**

The present application provides for a component for an electrolytic apparatus, comprising: a stack formed by a first porous transmission layer, a first electrode layer, a membrane, a second electrode layer, and a second porous transmission layer stacked in sequence along a stacking direction; a seal disposed about the stack in a lateral direction perpendicular to the stacking direction; and a first electrode frame comprising a first retaining portion and a second electrode frame comprising a second retaining portion. The first and second retaining portions mate with each other to maintain the first and second electrode frames as an integral structure, such that the first and second electrode frames retain the stack and the seal therebetween. The first porous transmission layer is at least partially disposed in the opening of the first electrode frame. Aside edge of the first porous transmission layer and the interior wall of the opening mate with each other in a shape-locked manner such that the first porous transmission layer is retained by the first electrode frame. The present application also provides an electrolytic apparatus comprising the aforementioned component. The component and the electrolytic apparatus according to the present application are easy to manufacture, assemble, and maintain.

## Description

### Technical Field

The present application generally relates to the field of electrolysis technology, and more particularly to a component for an electrolytic device and an electrolytic device including such a component.

### Background

Hydrogen finds wide application across numerous fields, including chemical engineering, energy, transportation, and electronics. There are a number of ways to make hydrogen, among which electrolytic hydrogen production technology is a research hotspot. In an exemplary alkaline solution electrolysis system, electrolyte is supplied to an electrolytic apparatus, and water within the electrolyte undergoes electrolysis in the electrolysis apparatus. The reaction products (hydrogen and oxygen) and unconsumed electrolytes are expelled from the electrolytic apparatus and separated from one another. The reaction products are subsequently purified and stored, whereas the unconsumed electrolyte is recirculated to the electrolytic apparatus.

An electrolytic apparatus typically comprises a plurality of electrolytic units stacked together and end plates for holding these electrolytic units together. Each electrolytic unit may comprise an anodic plate, an anodic porous transmission layer, an anodic electrode layer, a membrane, a cathodic electrode layer, a cathodic porous transmission layer, and a cathodic plate stacked in sequence. During the manufacture of the electrolytic apparatus, it is necessary to stack each of these components and hold them together by pressure. However, this manufacturing method is time-consuming and prone to assembly errors (e.g., misalignment, deformation, etc.), resulting in inefficient manufacturing and quality issues.

Furthermore, during the service life of an electrolytic unit (e.g., up to 120,000 hours), certain components (e.g., membranes) of the electrolytic unit may become damaged or fail, thereby necessitating maintenance of the electrolytic apparatus. However, electrolytic units and apparatuses manufactured via the aforementioned process are difficult to disassemble and reassemble, and such maintenance may also cause damage to other electrolytic units.

Therefore, there exists an urgent need to improve existing electrolytic apparatuses and their electrolytic units.

### Summary of the Invention

An object of the present application is to provide an improved component for an electrolytic apparatus and an electrolytic apparatus including such a component, so as to overcome at least one of the defects in the prior art.

In one aspect, the present application provides a component for an electrolytic apparatus, which may comprise: a stack formed by a first porous transmission layer, a first electrode layer, a membrane, a second electrode layer, and a second porous transmission layer stacked in sequence along a stacking direction; a seal disposed about the stack in a lateral direction perpendicular to the stacking direction; and a first electrode frame including a first retaining portion and a second electrode frame including a second retaining portion. The first retaining portion mates with the second retaining portion to maintain the first electrode frame and the second electrode frame as an integral structure such that the first electrode frame and the second electrode frame retain the stack and the seal therebetween. The first electrode frame further includes a first opening extending along the stacking direction through the first electrode frame and having a first interior wall. The first porous transmission layer is at least partially disposed in the first opening and has a first side edge. The first side edge mates with the first interior wall in a shape-locked manner such that the first porous transmission layer is retained by the first electrode frame.

In another aspect, the present application proposes an electrolytic apparatus that may include a plurality of electrolytic units, each of which may include the foregoing component, and which may be stacked along the stacking direction and retained together.

The component, the electrolytic unit including such a component, and the electrolytic apparatus according to the present application are easy to manufacture, assemble and maintain, have high reliability and flexibility, and are significantly cost-effective.

These techniques may be used alone or in any suitable combination. The foregoing summary is provided by way of illustration and is not meant to be limiting.

### Brief Description of the Drawings

The above and other aspects of the present disclosure will be understood and appreciated more thoroughly below in connection with the appended drawings. It should be noted that the drawings are merely illustrative and not drawn by scale. The same components are indicated by the same reference signs in different drawings. Additionally, for the sake of brevity, not all components or portions of the components, electrolytic unit, and electrolytic apparatus according to the present application are shown or labeled in the accompanying drawings. It should be understood that the dimensions, proportional relationships, and number of components or parts shown in the drawings are not to be considered as limitations on the present application. In the accompanying drawings:
FIG. 1 is a schematic partial cross-sectional view of an electrolytic apparatus according to some embodiments of the present application;
FIG. 2 is a schematic cross-sectional view of an electrolytic unit included in the electrolytic apparatus of FIG. 1, wherein the electrolytic unit is transverse relative to its orientation in FIG. 1;
FIG. 3A is a schematic cross-sectional view of a first electrode frame of the electrolytic unit of FIG. 2;
FIG. 3B is a schematic cross-sectional view of a second electrode frame of the electrolytic unit of FIG. 2;
FIG. 4A is a schematic top view of the first electrode frame of FIGS. 2 and 3A;
FIG. 4B is a schematic bottom view of the first electrode frame of FIG. 4A;
FIG. 5A is an enlarged view of an area "5A" surrounded by a dashed box in FIG. 2;
FIG. 5B is an enlarged view of an area "5B" surrounded by a dashed box in FIG. 2;
FIG. 6A is an enlarged view of an area "6A" surrounded by a dashed box in FIG. 2 showing permanent magnets aligned with each other;
FIG. 6B is an enlarged view similar to that of FIG. 6A, but shows that another permanent magnet is inserted into a gap between permanent magnets aligned with each other;
FIGS. 7A and 7B are, respectively, magnified views similar to FIG. 6A illustrating an optional type of an electrode frame that may be used in the electrolytic unit of FIG. 2 with lugs configured to be flippable;
FIGS. 8A and 8B are, respectively, magnified views similar to FIG. 6A illustrating another optional type of an electrode frame that can be used in the electrolytic unit of FIG. 2, where the permanent magnet of the electrode frame is configured to be flippable;
FIG. 9 is an enlarged view similar to that of FIG. 6A showing further another optional type of an electrode frame that may be used in the electrolytic unit of FIG. 2;
FIG. 10 is an enlarged view similar to that of FIG. 6A showing yet another optional type of an electrode frame that may be used in the electrolytic unit of FIG. 2;
FIG. 11 schematically illustrates a relative positioning relationship between the electrode frame of the electrolytic unit of FIG. 2 and the electrode frame of one adjacent electrolytic unit, with other components of these electrolytic units omitted from this view; and
FIG. 12 is an enlarged view similar to FIG. 5A showing an optional type of a first electrode frame.

### Detailed Description of the Embodiments

Some examples of the present application are described in detail below in conjunction with the drawings. In the following examples, for the purpose of facilitating the description of the component and an electrolytic unit and an electrolytic apparatus comprising the component according to the present application, as well as the corresponding manufacturing and assembly method, an alkaline solution electrolytic apparatus is used as an example. It should be understood that such an example does not imply any limitation on the present application, and the component, the electrolytic unit and the electrolytic apparatus according to the present application, as well as the corresponding manufacturing and assembly method, or variations thereof, can be used in other types of electrolytic systems, such as proton exchange membrane (PEM) electrolytic systems, and anion exchange membrane (AEM) electrolytic systems. Furthermore, features in the examples of the present application may be combined with each other, provided there is no conflict.

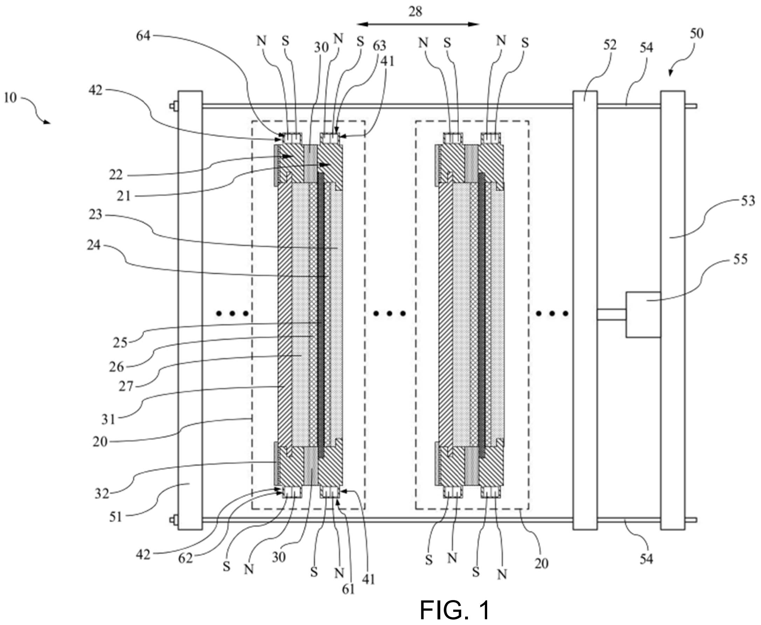

FIG. 1 schematically illustrates an electrolytic apparatus 10 for an electrolytic system (not shown) according to some examples of the present application. The electrolytic system may be an alkaline solution electrolytic system, which uses an alkaline solution (e.g., potassium hydroxide solution, sodium hydroxide solution, etc.) as an electrolyte. The electrolytic apparatus 10 is configured to electrolyze water in the alkaline electrolyte to generate hydrogen and oxygen. The electrolytic apparatus 10 may also be referred to as an "electrolysis cell" or "electrolysis tank." The electrolytic apparatus 10 may comprise a housing (not shown) and a plurality of electrolytic units 20 housed within the housing.

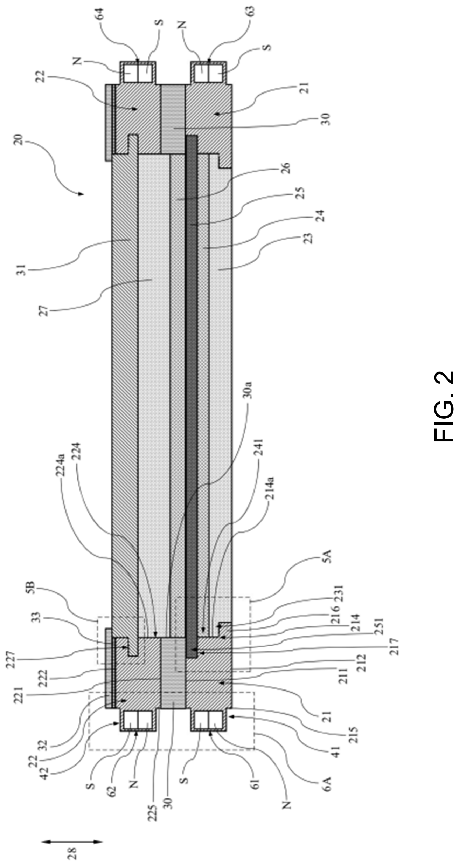

The plurality of electrolytic units 20 may have the same or substantially the same configuration as one another. FIGs. 2 to 6B show a configuration of one of the electrolytic units 20. The electrolytic unit 20 may also be referred to as an "electrolysis cell" or "electrolysis tank." As shown in FIG. 2, the electrolytic unit 20 comprises a first electrode frame 21, a second electrode frame 22, and a stack formed by a first porous transmission layer 23, a first electrode layer 24, a membrane (in this case, a diaphragm) 25, a second electrode layer 26, and a second porous transmission layer 27 stacked in sequence along a stacking direction 28. The membrane 25 is positioned between the first electrode layer 24 and the second electrode layer 26, the first porous transmission layer 23 is positioned on a side of the first electrode layer 24 facing away from the membrane 25, and the second porous transmission layer 27 is positioned on a side of the second electrode layer 26 facing away from the membrane 25. The layers may contact one another. The first electrode frame 21 and the second electrode frame 22 are spaced apart from one another in the stacking direction 28 and hold the stack between the first electrode frame 21 and the second electrode frame 22 (as will be described specifically below). The first electrode layer 24 and the second electrode layer 26 may be electrically coupled with an external DC power source (not shown). The membrane 25 allows ions to pass through but prohibits gas molecules from passing through.

For example, the first electrode frame 21 may be an anodic electrode frame and the second electrode frame 22 is correspondingly a cathodic electrode frame. In this instance, the first porous transmission layer 23 and the first electrode layer 24 are an anodic porous transmission layer and an anodic electrode layer, respectively, and the second porous transmission layer 27 and the second electrode layer 26 are a cathodic porous transmission layer and a cathodic electrode layer, respectively. The configuration of the electrolytic unit 20 will be described below in conjunction with such an example, but it is to be understood that the present application is not so limited.

Taking the electrolytic unit 20 as an example, during operation, the electrolyte circulates through the electrolytic unit 20, and an external DC power supply provides direct current to the first electrode layer 24 and the second electrode layer 26 of the electrolytic unit 20. At the second electrode layer 26 (i.e., cathodic electrode layer), water molecules gain electrons to generate hydrogen molecules and hydroxide ions (i.e., a reduction reaction occurs: 4H₂O + 4e⁻ → 2H₂ + 4OH⁻). Here, hydrogen molecules, unable to pass through the membrane 25, are discharged with the electrolyte, while hydroxide ions, driven by voltage, pass through the membrane 25 from the second electrode layer 26 to the first electrode layer 24. At the first electrode layer 24 (i.e., the anodic electrode layer), the hydroxide ion loses electrons to generate oxygen molecules and water molecules (i.e., an oxidation reaction occurs: 4*OH⁻*→ 2*H*₂*O* + *O*₂ + 4*e*⁻), wherein the oxygen molecule is expelled with the electrolyte due to its inability to pass through the membrane 25.

Following the same principle, each electrolytic unit 20 may receive electrolyte and, after the above-mentioned electrochemical reaction, discharge an electrolyte containing hydrogen on the cathode side (i.e., discharge the reaction products and unconsumed electrolyte on the cathode side), while simultaneously discharging an electrolyte containing oxygen on the anode side (i.e., discharge the reaction products and unconsumed electrolyte on the anode side). Accordingly, the electrolytic apparatus 10 is provided with a hydrogen-side (also known as a cathode side) outlet for discharging the electrolyte containing hydrogen, an oxygen-side (also known as an anode side) outlet for discharging the electrolyte containing oxygen, and an inlet (not shown) for receiving the electrolyte.

Although not shown, it is contemplated that each of the electrolytic units 20 includes an anode side outlet manifold channel, a cathode side outlet manifold channel, and an electrolyte inlet manifold channel. When a plurality of electrolytic units 20 are stacked and held together along the stacking direction 28 as shown in FIG. 1, the anode side outlet manifold channel, the cathode side outlet manifold channel and the electrolyte inlet manifold channel of the plurality of electrolytic units 20 are respectively aligned in the stacking direction 28 to form an anode side outlet manifold, a cathode side outlet manifold and an electrolyte inlet manifold. The electrolyte inlet manifold distributes the electrolyte received through the inlet of the electrolytic apparatus 10 to each electrolytic unit 20. The cathode side outlet manifold collects the hydrogen-containing electrolyte discharged from each electrolytic unit 20 to the hydrogen side outlet of the electrolytic apparatus 10, and the anode side outlet manifold collects the oxygen-containing electrolyte discharged from each electrolytic unit 20 to the oxygen side outlet of the electrolytic apparatus 10.

With continued reference to FIG. 2, each electrolytic unit 20 also includes a seal 30 that provides a seal that separates the interior space of the electrolytic unit 20 for circulating electrolytes from the exterior of the electrolytic unit 20. In particular, the seal 30 is disposed around the aforementioned stack in a lateral direction (not shown) perpendicular to the stacking direction 28. In other words, the seal 30 can surround the internal space of the electrolytic unit 20 for the flow of electrolyte to provide a seal, thereby isolating it from the outside of the electrolytic unit 20. The seal 30 may be disposed in the stacking direction 28 between the first electrode frame 21 and the second electrode frame 22. As used in the present application, the "lateral direction" refers to any direction perpendicular to the stacking direction 28. The seal 30 may be formed from any suitable material, such as polytetrafluorethylene (PTFE). Although the seal 30 is shown as a single piece, it is to be understood that the present application is not to be so limited, and in other embodiments, the seal 30 may also include multiple pieces.

It is also contemplated that in each electrolytic unit 20, each of the anode side outlet manifold channel, the cathode side outlet manifold channel, and the electrolyte inlet manifold channel may extend through the seal 30 in the stacking direction 28. In other words, the seal 30 may comprise a plurality of orifices extending through the seal 30 along the stacking direction 28, and these orifices may respectively form a section of the anode side outlet manifold channel, the cathode side outlet manifold channel, and the electrolyte inlet manifold channel.

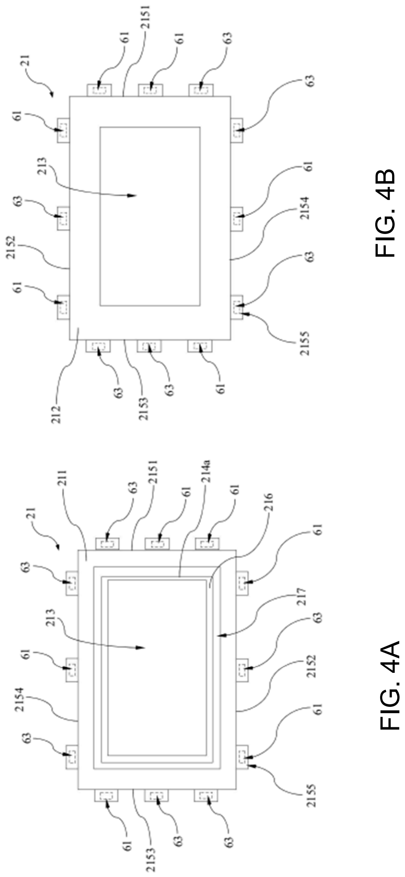

The first electrode frame 21 may be formed from any suitable material, such as a resin or metal material. FIG. 2, FIG. 3A, FIG. 4A, and FIG. 4B specifically illustrate one exemplary model of the first electrode frame 21. As shown in the drawings, the first electrode frame 21 may include a first surface 211 and a second surface 212 opposite each other in the stacking direction 28. The first electrode frame 21 may also include an opening 213 extending along the stacking direction 28 through the first electrode frame 21. The opening 213 extends from the first surface 211 along the stacking direction 28 through the first electrode frame 21 to the second surface 212. As such, the first electrode frame 21 may be in the shape of a generally rectangular frame. The opening 213 may have an interior wall 214. That is, the shape of the opening 213 is defined by the interior wall 214. As will be described specifically below, the opening 213 is configured for receiving at least a portion of the aforementioned stack. The opening 213 may be used to define an anode side flow space of the electrolytic unit 20. The first electrode frame 21 may also include an outer wall 215 opposite the interior wall 214. The outer wall 215 defines an outer boundary of the first electrode frame 21 in a lateral direction perpendicular to the stacking direction 28. As shown in FIGS. 4A and 4B, the outer wall 215 may include a first wall section 2151, a second wall section 2152, a third wall section 2153 and a fourth wall section 2154. The first wall section 2151 and the third wall section 2153 are opposite to one another, and the second wall section 2152 and the fourth wall section 2154 are opposite to one another and extend between the first wall sections 2151 and the third wall section 2153, respectively.

Although not shown, it is contemplated that each of the anode side outlet manifold channel, the cathode side outlet manifold channel, and the electrolyte inlet manifold channel of the electrolytic unit 20 may extend through the first electrode frame 21 in the stacking direction 28. In other words, the first electrode frame 21 may comprise a plurality of orifices extending through the first electrode frame 21 along the stacking direction 28. These orifices may respectively form a section of the anode side outlet manifold channel, the cathode side outlet manifold channel, and the electrolyte inlet manifold channel. For example, the opening 213 may be opened in the center of the first electrode frame 21 and these orifices may be opened around the opening 213. The opening 213 may also be referred to as a "center opening." Although not shown, it is contemplated that the first electrode frame 21 may also include an input channel and an output channel, wherein the input channel communicates the electrolyte inlet manifold channel with the opening 213 for inputting electrolytes from the electrolyte inlet manifold channel into the anode side flow space of the electrolytic unit 20, and the output channel communicates the opening 213 with the anode side outlet manifold channel for expelling the anode side reaction product and unconsumed electrolyte from the anode side flow space to the anode side outlet manifold channel.

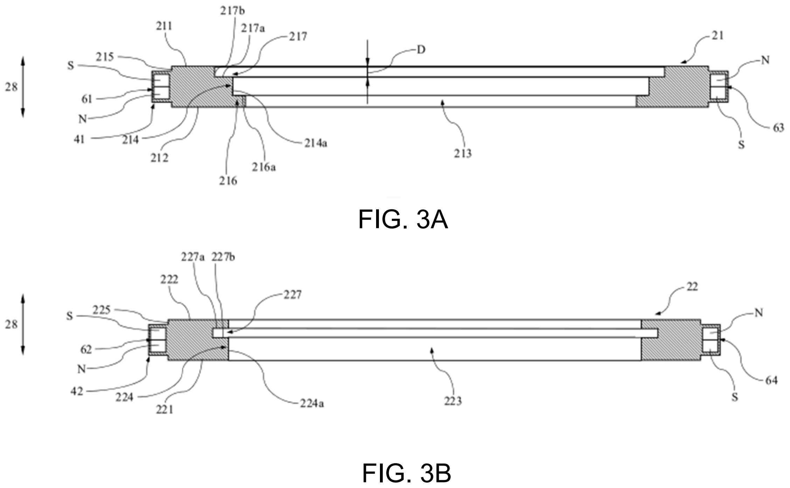

The second electrode frame 22 may be formed from any suitable material, such as a resin or metal material. As shown in FIGS. 2 and 3B, one exemplary model of the second electrode frame 22 is specifically illustrated. As shown in the drawings, the second electrode frame 22 may be similar in configuration to the first electrode frame 21. The second polar frame 22 may include a first surface 221 and a second surface 222 opposite each other in the stacking direction 28. The second polar frame 22 may also include an opening 223 extending along the stacking direction 28 through the second polar frame 22. The opening 223 extends from the first surface 221 along the stacking direction 28 through the second polar frame 22 to the second surface 222. As such, the second polar frame 22 may be in the shape of a generally rectangular frame. The opening 223 may have an interior wall 224. That is, the shape of the opening 223 is defined by the interior wall 224. Similar to the opening 213 of the first polar frame 21 and as will be described specifically below, the opening 223 is configured to receive at least a portion of the aforementioned stack. The opening 223 may be used to define a cathode side flow space of the electrolytic unit 20. The second polar frame 22 may also include an outer wall 225 opposite the interior wall 224. Similar to the outer wall 215 of the first polar frame 21, the outer wall 225 defines an outer boundary of the first polar frame 21 in a lateral direction perpendicular to the stacking direction 28 and may include four wall sections.

Although not shown, it is contemplated that each of the anode side outlet manifold channel, the cathode side outlet manifold channel, and the electrolyte inlet manifold channel of the electrolytic unit 20 may extend through the second polar frame 22 in the stacking direction 28. In other words, the second electrode frame 22 may comprise a plurality of orifices extending through the second electrode frame 22 along the stacking direction 28. These orifices may respectively form a section of the anode side outlet manifold channel, the cathode side outlet manifold channel, and the electrolyte inlet manifold channel. For example, the opening 223 may be provided in the center of the second electrode frame 22 and these orifices may be provided around the opening 223. Accordingly, the opening 223 may also be referred to as a "center opening." Although not shown, it is contemplated that the second electrode frame 22 may also include an input channel and an output channel, wherein the input channel communicates the electrolyte inlet manifold channel with the opening 223 for inputting electrolytes from the electrolyte inlet manifold channel into the cathode side flow space of the electrolytic unit 20, and the output channel communicates the opening 223 with the cathode side outlet manifold channel for expelling the cathode side reaction product and unconsumed electrolyte from the cathode side flow space to the cathode side outlet manifold channel.

As shown in FIGS. 2 to 3B, the first electrode frame 21 may also include a first retaining portion 41, and the second electrode frame 22 may also include a second retaining portion 42. The first retaining portion 41 and the second retaining portion 42 may be mated to keep the first electrode frame 21 and the second electrode frame 22 in an integral structure such that the first electrode frame 21 and the second electrode frame 22 retain the aforementioned stack and the seal 30 therebetween. As used in the present application, "an integrated structure" means that the components are held together so that they can be moved together (e.g., moved to a designated location or position), installed (e.g., installed into the electrolytic apparatus 10), and removed (e.g., removed from the electrolytic apparatus 10).

In this way, the first electrode frame 21, the second electrode frame 22, the stack, and the seal 30 can be formed as an integral component, i.e., a single piece overall structure. In other words, the electrolytic unit according to the present application may include such an integral component. During the manufacture of the electrolytic apparatus 10, the electrolytic unit 20 can be manufactured or formed using this integral component first, and then the individual electrolytic units 20 can be stacked together to form the electrolytic apparatus 10. The integral component is easier to handle during the manufacture of the electrolytic unit 20 and the electrolytic apparatus 10, thereby improving the manufacturing efficiency of the electrolytic apparatus 10. Furthermore, the integral component can significantly reduce assembly errors (such as misalignment, deformation, etc.) during the manufacture of the electrolytic apparatus 10, thereby improving the quality of the electrolytic apparatus 10. When some components of the electrolytic unit 20 are damaged or fail and need to be replaced, this integral component makes it easier to disassemble, replace, and reassemble, thereby improving the maintenance efficiency of the electrolytic apparatus 10 and reducing its maintenance costs. Compared to existing technologies where the components of the electrolytic unit are held together solely by pressure, the first retaining portion 41 of the first electrode frame 21 and the second retaining portion 42 of the second electrode frame 22 can provide an initial retaining force to hold the components together, thereby facilitating the assembly and maintenance of the electrolytic apparatus 10 and improving the integration and reliability of the electrolytic unit 20. That is, for the manufactured electrolytic unit 20, the retaining forces of the first electrode frame 21 and the second electrode frame 22 for the stack and the seal 30 are provided by the first retaining portion 41 and the second retaining portion 42. As will be described specifically below, when the plurality of electrolytic units 20 are assembled into the electrolytic apparatus 10, a grip 50 (see FIG. 1) applies a clamping force to the plurality of electrolytic units 20 to hold the plurality of electrolytic units 20 together. In this case, the clamping force of the first electrode frame 21 and the second electrode frame 22 on the stack and the seal 30 is further provided by the grip 50. Furthermore, the electrolytic unit 20 having such an integral component allows for flexible adjustments in the number of the electrolytic units 20 within the electrolytic apparatus 10 as needed, thereby improving the flexibility of the electrolytic apparatus 10. Therefore, the integral component and the electrolytic unit 20 and the electrolytic apparatus 10 comprising such an integral component according to the present application are easy to manufacture, assemble and maintain, have high reliability and flexibility, and are significantly cost-effective.

As shown in FIG. 2, the first surface 211 of the first electrode frame 21 may face toward the first surface 221 of the second electrode frame 22. The second surface 212 of the first electrode frame 21 may face away from the second electrode frame 22, and the second surface 222 of the second electrode frame 22 may face away from the first electrode frame 21.

In some embodiments, as shown in FIG. 2, the first porous transmission layer 23 may be at least partially disposed in the opening 213 of the first electrode frame 21 and have a side edge (or alternatively, side edge portion) 231. The side edge 231 of the first porous transmission layer 23 and the interior wall 214 of the first electrode frame 21 are configured to mate with each other in a shape-locked manner such that the first porous transmission layer 23 is retained by the first electrode frame 21. In other words, the side edge 231 and the interior wall 214 may cooperate in shape such that the first porous transmission layer 23 is held in place by the first electrode frame 21. In particular, when the first electrode frame 21 and the second electrode frame 22 are held as an integral structure as previously described, the first porous transmission layer 23 may be retained by the first electrode frame 21 without shifting relative to the first electrode frame 21 by a shape-locked fit between the side edge 231 and the interior wall 214. This fit between the first electrode frame 21 and the first porous transmission layer 23 enables the first porous transmission layer 23 to be reliably held in place relative to the first electrode frame 21, thereby improving the structural reliability of the aforementioned integral component.

In one of these embodiments, as shown in FIGS. 2, 3A, and 4A, the interior wall 214 of the first electrode frame 21 may include a surface 214a and a tab 216 protruding from the surface 214a into the opening 213. The side edge 231 of the first porous transmission layer 23 is supported by the tab 216 in the stacking direction 28. That is, the tab 216 of the first electrode frame 21 may be used as a limit to limit the first porous transmission layer 23 from passing through the opening 213 in the stacking direction 28, thereby retaining the first porous transmission layer 23 in place relative to the first electrode frame 21. More particularly, as best shown in FIG. 2, the tab 216 of the first electrode frame 21 may limit movement of the first porous transmission layer 23 away from the membrane 25 in the stacking direction 28.

In some examples, as shown in FIG. 4A, the tab 216 of the first electrode frame 21 may be a continuous annular tab around the first porous transmission layer 23. This enables uniform support around the side edge 231 of the first porous transmission layer 23.

In other examples, the tab 216 of the first electrode frame 21 may include a plurality of tab sections (not shown) that are distributed at intervals around the first porous transmission layer 23. This allows for maximizing the volume of the first porous transmission layer 23 while providing reliable support to the first porous transmission layer 23, thereby maximizing the effective area for reactant transport. This is beneficial for improving the performance of the electrolytic unit 20.

The tab 216 may have any suitable shape. In some examples, as shown in FIGS. 2, 3A, and 5A, the tab 216 may be a stepped tab and have a top surface 216a facing the stacking direction 28. The side edge 231 of the first porous transmission layer 23 is supported by the top surface 216a in the stacking direction 28. Further, the side edge 231 of the first porous transmission layer 23 may engage with the surface 214a of the opening 213 of the first electrode frame 21 in a lateral direction to be limited by the surface 214a. In this way, the first porous transmission layer 23 can be reliably held in place relative to the first electrode frame 21.

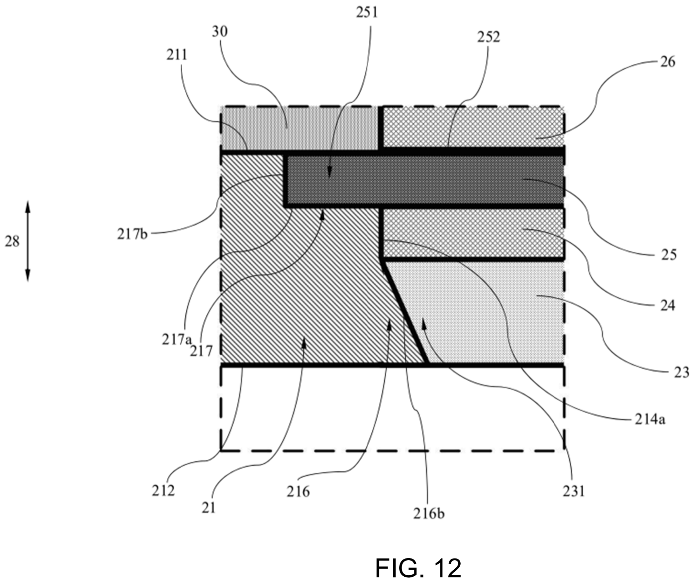

In other examples, as shown in FIG. 12, the tab 216 may be a ramped tab and have a ramped face 216b that is inclined relative to the stacking direction 28. The side edge 231 of the first porous transmission layer 23 is supported by the ramp face 216b in the stacking direction 28. The ramp face 216b may be configured such that the size of at least a portion of the opening 213 tapers in a direction from the first surface 211 to the second surface 212 of the first electrode frame 21. The ramp face 216b may provide uniform support to the side edge 231 of the first porous transmission layer 23 to avoid stress concentrations.

In some embodiments, as shown in FIG. 2, each of the first porous transmission layer 23 and the first electrode layer 24 may be disposed integrally in the opening 213 of the first electrode frame 21. The first electrode layer 24 may be supported by the first porous transmission layer 23 in the stacking direction 28. The side edge 241 of the first electrode layer 24 may engage with the surface 214a of the opening 213 of the first electrode frame 21 in a lateral direction to be limited by the surface 214a. In this way, the first electrode layer 24 can be reliably held in place relative to the first electrode frame 21.

As shown in FIGS. 2, 3A, 4A, and 5A, the interior wall 214 of the first electrode frame 21 may also include an annular groove 217. The annular groove 217 may recess inwardly in the stacking direction 28 from the first surface 211 of the first electrode frame 21 facing the second electrode frame 22 into the first electrode frame 21 and extend to the bottom surface 217a of the annular groove 217, and may be recessed inwardly in a lateral direction from the first surface 214a into the first electrode frame 21 and extend to the side surface 217b of the annular groove 217. That is, the annular groove 217 is recessed inward into the first electrode frame 21 from the first surface 211 of the first electrode frame 21, and is in communication with the opening 213 in the lateral direction and is wider than the opening 213. The annular groove 217 has a bottom surface 217a and a side surface 217b.

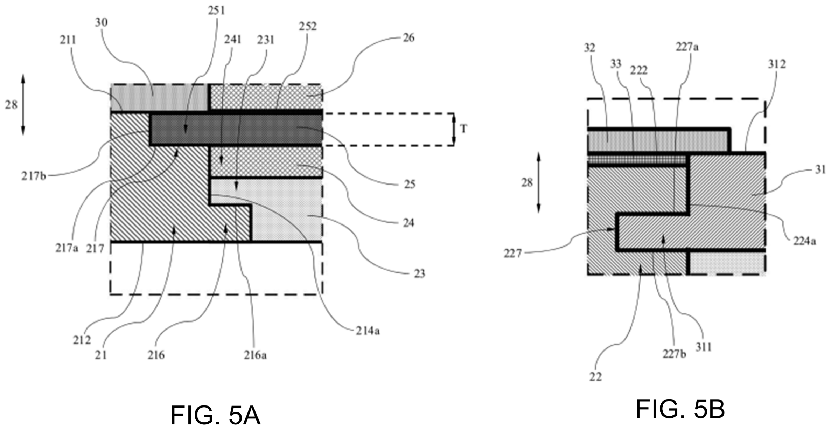

In some embodiments, as shown in FIGS. 2 and 5A, the membrane 25 may be at least partially disposed in the opening 213 of the first electrode frame 21 and have a side edge (or alternatively, side edge portion) 251. The side edge 251 of the membrane 25 is supported in the stacking direction 28 by the bottom surface 217a of the annular groove 217. That is, the bottom surface 217a of the annular groove 217 of the first electrode frame 21 may be used as a limit to hold the membrane 25 in place relative to the first electrode frame 21. More specifically, as best shown in FIG. 2, the bottom surface 217a may restrict movement of the membrane 25 in the stacking direction 28 towards the first porous transmission layer 23 and the first electrode layer 24. Further, the side edge 251 of the membrane 25 may be engaged in a lateral direction with the side surface 217b of the annular groove 217 to be limited by the side surface 217b. In this way, the membrane 25 can be reliably held in place relative to the first electrode frame 21.

In one of these embodiments, as shown in FIGS. 2 and 5A, the membrane 25 may be disposed integrally in the opening 213 of the first electrode frame 21. The side edges 251 of the membrane 25 may all be located in the annular groove 217 of the first electrode frame 21. As shown in FIG. 5A, the side edge 251 of the membrane 25 has a thickness T in the stacking direction 28. As shown in FIG. 3A, the annular groove 217 of the first electrode frame 21 has a depth D in the stacking direction 28. The depth D is a distance from the first surface 211 of the first electrode frame 21 to the bottom surface 217a of the annular groove 217.

In some embodiments, when the first electrode frame 21 and the second electrode frame 22 are held together, the surface 252 of the membrane 25 facing away from the first electrode layer 24 can be flush with the first surface 211 of the first electrode frame 21, and the thickness T of the side edge 251 of the membrane 25 can be equal to the depth D of the annular groove 217 of the first electrode frame 21. This configuration prevents the side edge 251 of the membrane 25 from being excessively compressed, thereby reducing the risk of damage to the membrane 25 and improving the reliability and service life of the membrane 25. In particular, the membrane 25 is compressible and therefore the thickness T decreases when it is compressed. For example, the thickness T may be 500 microns when the membrane 25 is not compressed. While the first electrode frame 21 and the second electrode frame 22 are held together, the membrane 25 is compressed and the thickness T is reduced due to the retaining force applied by the first retaining portion 41 and the second retaining portion 42 to the membrane 25. The amount of compression of the membrane 25 may be set by setting the depth D of the annular groove 217. For example, the depth D of the annular groove 217 may be set to 400 microns such that the membrane 25 can only be compressed to 400 microns. It should be understood that the specific values of the thickness T and the depth D are not so limited.

As shown in FIG. 2, the seal 30 may be clamped in the stacking direction 28 between the first surface 211 of the first electrode frame 21 and the first surface 221 of the second electrode frame 22. In some examples, as best shown in FIG. 5A, the seal 30 may extend inwardly in a lateral direction beyond the side surface 217b of the annular groove 217 to press against the side edge 251 of the membrane 25. This configuration provides a reliable seal between the cathode side and the anode side at the side edge 251 of the membrane 25, thereby effectively preventing gas crossover between the cathode side and the anode side.

In some embodiments, as shown in FIG. 2, the second porous transmission layer 27 may be partially disposed in the opening 223 of the second electrode frame 22. For example, in some examples, the second porous transmission layer 27 and the second electrode frame 22 may mate with each other in a manner similar to the mating of the first porous transmission layer 23 and the first electrode frame 21 (e.g., in the shape-locked manner described above) to reliably hold the second porous transmission layer 27 in place relative to the second electrode frame 22.

It should be understood that in other embodiments, the second porous transmission layer 27 may be disposed integrally in the opening 223 of the second electrode frame 22.

In some embodiments, as shown in FIG. 2, the second electrode layer 26 is disposed integrally between annular sidewalls 30a of the seal 30 to reliably retain the second electrode layer 26 in place. However, it should be understood that the present application is not so limited and that in other partial embodiments, the second electrode layer 26 may be partially disposed in the opening 223 of the second electrode frame 22.

In other partial examples, as shown in FIG. 2, the aforementioned integral component may further include a plate 31, and the second electrode frame 22 may retain the plate 31 to retain the second porous transmission layer 27 in the opening 223 of the second electrode frame 22. That is, the second electrode frame 22 may retain the second porous transmission layer 27 in the opening 223 by retaining the plate 31. The configuration of the integral component, including the plate 31, can further improve the degree of integration of the components in the electrolytic unit 20, thereby further facilitating the manufacture, assembly, and maintenance of the electrolytic unit 20 and the electrolytic apparatus 10 including such an electrolytic unit 20.

Exemplarily, as shown in FIG. 3B, the interior wall 224 of the second electrode frame 22 may include a surface 224a and an annular groove 227 recessed inwardly from the surface 224a in a lateral direction into the second electrode frame 22. As shown in FIGS. 2 and 5B, the side edge 311 of the plate 31 may be inserted into the annular groove 227 such that the plate 31 is retained by the second electrode frame 22. The annular groove 227 may have two side surfaces 227a and 227b opposite each other in the stacking direction 28. The side edge 311 of the plate 31 may be clamped between the side surfaces 227a and 227b. For example, the side edge 311 of the plate 31 may be a tab or narrow edge protruding from the body of the plate 31. In this way, the plate 31 can be reliably held in place relative to the second electrode frame 22. The plate 31 may serve as a limit to hold the second porous transmission layer 27 in place relative to the second electrode frame 22. The plate 31 may prevent the second porous transmission layer 27 from moving through the opening 223 on the side of the second porous transmission layer 27 facing away from the membrane 25. The surface 312 of the plate 31 facing away from the second porous transmission layer 27 may be flush with the second surface 222 of the second electrode frame 22.

It will be understood that in other embodiments, the plate 31 may also be attached to the second electrode frame 22 in any other suitable manner or integrally formed with the second electrode frame 22.

The plate 31 may provide a flow field on at least one side for circulation of reaction fluid. For example, the plate 31 may be a bipolar plate that provides a cathodic flow field on one side facing the second porous transmission layer 27 (where the second porous transmission layer 27 is a cathodic porous transmission layer) and provides an anodic flow field on a side facing away from the second porous transmission layer 27. The cathodic flow field of the plate 31 may define the cathodic side flow space of the electrolytic unit 20 shown in FIG. 2, and the anodic flow field of the plate 31 may define the anodic side flow space of another electrolytic unit adjacent to the electrolytic unit 20 shown in FIG. 2. That is, where the plate 31 is a bipolar plate, the electrolytic unit 20 shares the plate 31 with an adjacent electrolytic unit.

It should be understood that the configuration of the plate 31 is not so limited. For example, the plate 31 may be a monopole plate. Specifically, where the second porous transmission layer 27 is a cathodic porous transmission layer, the plate 31 is correspondingly a cathodic plate and provides a cathodic side flow field. In this instance, another monopole plate (not shown) may be held or fixed in any suitable manner (e.g., by attachment to the first electrode frame 21) on a side of the first porous transmission layer 23 facing away from the first electrode layer 24 and act as an anodic plate.

In some embodiments, as shown in FIGS. 2 and 5B, the aforementioned integral component may further include a seal 32 fixed on the second surface 222 of the second electrode frame 22 facing away from the first electrode frame 21. The seal 32 may be formed from any suitable material, such as polytetrafluorethylene (PTFE). The configuration of the integral component, including the seal 32, may further improve the degree of integration of the various components in the electrolytic unit 20, thereby further facilitating the manufacture, assembly, and maintenance of the electrolytic unit 20 and the electrolytic apparatus 10 including such an electrolytic unit 20.

The seal 32 is configured for providing a seal between the electrolytic unit 20 and another adjacent electrolytic unit. Specifically speaking, each of the anode side outlet manifold channel, the cathode side outlet manifold channel, and the electrolyte inlet manifold channel of the electrolytic unit 20 may extend through the seal 32 along the stacking direction 28. In other words, the seal 32 may comprise a plurality of orifices extending through the seal 32 along the stacking direction 28, and these orifices may respectively form a section of the anode side outlet manifold channel, the cathode side outlet manifold channel, and the electrolyte inlet manifold channel. Further, with the surface 312 of the plate 31 flush with the second surface 222 of the second electrode frame 22, the seal 32 may extend inwardly in a lateral direction beyond the surface 224a of the interior wall 224 of the plate 31 to press against the plate 31 to provide a reliable seal against the plate 31.

In some embodiments, as best shown in FIG. 5B, the seal 32 may be adhered to the second surface 222 of the second electrode frame 22 through an adhesive layer 33. The adhesive layer 33 may be formed from any suitable adhesive material. It should be understood that in other embodiments, the seal 32 may be affixed to the second surface 222 of the second electrode frame 22 by any other suitable means (e.g., snaps, hot fuses, etc.).

In some embodiments, the first retaining portion 41 of the first electrode frame 21 and the second retaining portion 42 of the second electrode frame 22 may be configured to mate with each other to removably retain the first electrode frame 21 and the second electrode frame 22 together, i.e., removably retain the first electrode frame 21 and the second electrode frame 22 as an integral structure. As used in the present application, "removably retaining the first electrode frame 21 and the second electrode frame 22 as an integral structure" refers to the first electrode frame 21 and the second electrode frame 22 being maintained as an integral structure and being able to be separated from one another in a non-destructive manner (e.g., by hand or by means of tools) if desired. Since the first retaining portion 41 and the second retaining portion 42 removably hold the first electrode frame 21 and the second electrode frame 22 together, the first electrode frame 21 and the second electrode frame 22 are able to removably retain the stack and the seal 30 therebetween. Such a configuration may further facilitate the manufacture, assembly, and maintenance of the aforementioned integral component, the electrolytic unit 20, and the electrolytic apparatus 10 comprising such an electrolytic unit 20.

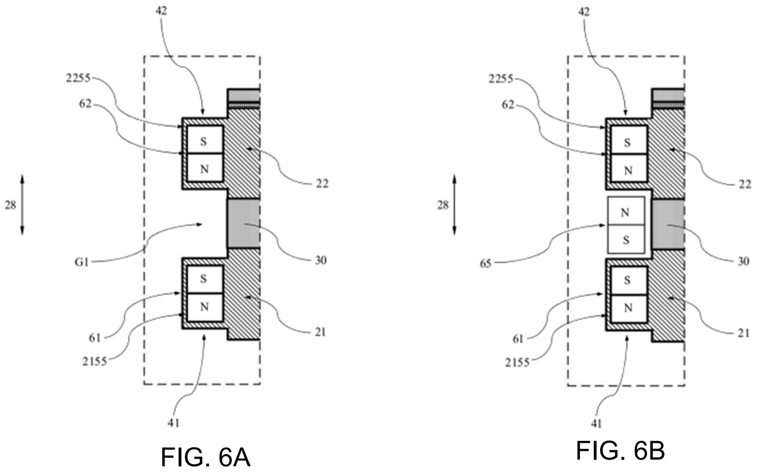

Exemplarily, as shown in FIGS. 2 and 6A, the first retaining portion 41 of the first electrode frame 21 may be a first magnetic attraction portion and the second retaining portion 42 of the second electrode frame 22 may be a second magnetic attraction portion. The first magnetic attraction portion and the second magnetic attraction portion may be configured to cooperate with each other to magnetically attract each other, thereby removably holding the first electrode frame 21 and the second electrode frame 22 together, i.e., removably retaining the first electrode frame 21 and the second electrode frame 22 as an integral structure. As used in the present application, that "the first magnetic attraction portion and the second magnetic attraction portion magnetically attract each other" refers to that the magnetic field force generated by at least one of the first magnetic attraction portion and the second magnetic attraction portion causes the first magnetic attraction portion and the second magnetic attraction portion to move closer to each other or remain in contact. The use of a magnetic attraction portion as a retaining portion can facilitate the manufacture, assembly, and maintenance of the aforementioned integral component, the electrolytic unit 20, and the electrolytic apparatus 10 comprising such an electrolytic unit 20.

In some embodiments, at least one of the first magnetic attraction portion of the first electrode frame 21 and the second magnetic attraction portion of the second electrode frame 22 may include a permanent magnet to enable the first magnetic attraction portion and the second magnetic attraction portion to magnetically attract one another. As used in the present application, a "permanent magnet" refers to a magnet that can remain magnetic for a long time without the need for external energy. The permanent magnet is typically made of a hard magnetic material (e.g., neodymium iron boron, aluminum nickel cobalt, ferrite, etc.). The permanent magnet has a first magnetic pole and a second magnetic pole that are opposite to each other. In the present application, when referring to individual permanent magnets, the first magnetic poles of these permanent magnets refer to a first magnetic pole of the same polarity and the second magnetic poles of these permanent magnets refer to a second magnetic pole of the same polarity and opposite to the first magnetic pole, unless otherwise specified. That is, for each of the permanent magnets in the present application, the first magnetic pole refers to a magnetic pole of a certain polarity, and the second magnetic pole refers to another magnetic pole of the same polarity that is opposite to the polarity of the first magnetic pole. The first magnetic pole may be an S-pole, and the second magnetic pole is correspondingly an N-pole, and vice versa. In the following description, the configuration of the first magnetic attraction portion and the second magnetic attraction portion will be described in connection with an example where the first magnetic pole is an S-pole and the second magnetic pole is an N-pole, but it is to be understood that the present application is not so limited.

In one of these embodiments, each of the first magnetic attraction portion and the second magnetic attraction portion may include a permanent magnet. As shown in FIGS. 2 and 6A, the first magnetic attraction portion may include a plurality of first permanent magnets 61 (only one first permanent magnet 61 is shown in the figure), and the second magnetic attraction portion may include a plurality of second permanent magnets 62 (only one second permanent magnet 62 is shown in the figure). Each of the plurality of first permanent magnets 61 and second permanent magnets 62 has a first magnetic pole (i.e., an S-pole) and a second magnetic pole (i.e., an N-pole). In FIGS. 2 and 6A, the first magnetic pole and the second magnetic pole of these permanent magnets are marked with "S" and "N", respectively. Each of the plurality of first permanent magnets 61 and second permanent magnets 62 is oriented such that their first pole and second pole are opposite to each other in the stacking direction 28. Each of the plurality of first permanent magnets 61 and a corresponding second permanent magnet 62 of the plurality of second permanent magnets 62 are aligned with each other in the stacking direction 28 such that the first pole of each first permanent magnet 61 and the second pole of the corresponding second permanent magnet 62 face each other. That is, the first pole of each first permanent magnet 61 and the second pole of the corresponding second permanent magnet 62 are opposing each other in the stacking direction 28. Correspondingly, the second pole of the first permanent magnet 61 faces away from the second permanent magnet 62 in the stacking direction 28, and the first pole of the second permanent magnet 62 faces away from the first permanent magnet 61 in the stacking direction 28. In this way, each first permanent magnet 61 and the corresponding second permanent magnet 62 are magnetically attracted to each other to removably retain the first electrode frame 21 and the second electrode frame 22 as an integral structure, so that the first electrode frame 21 and the second electrode frame 22 retain the stack and the seal 30 therebetween. The configuration in which each of the first magnetic attraction portion and the second magnetic attraction portion includes a permanent magnet provides a reliable retaining force between the first electrode frame 21 and the second electrode frame 22

In some examples, with continuous reference to FIG. 2, the first magnetic attraction portion may further include a plurality of third permanent magnets 63 (only one third permanent magnet 63 is shown in the figure) and the second magnetic attraction portion may also include a plurality of fourth permanent magnets 64 (only one fourth permanent magnet 64 is shown in the figure). Each of the plurality of third permanent magnets 63 and the plurality of fourth permanent magnets 64 has a first magnetic pole (i.e., an S-pole) and a second magnetic pole (i.e., an N-pole). In FIG. 2, the first pole and the second pole of these permanent magnets are marked with "S" and "N", respectively. Each of the plurality of third permanent magnets 63 and fourth permanent magnets 64 is oriented such that their first pole and second pole are opposite to each other in the stacking direction 28. Each of the plurality of third permanent magnets 63 and a corresponding fourth permanent magnet 64 of the plurality of fourth permanent magnets 64 are aligned with each other in the stacking direction 28 such that the second pole of each third permanent magnet 63 and the first pole of the corresponding fourth permanent magnet 64 face each other. That is, the second pole of each third permanent magnet 63 and the first pole of the corresponding fourth permanent magnet 64 are opposing each other in the stacking direction 28. The first pole of the third permanent magnet 63 faces away from the fourth permanent magnet 64 in the stacking direction 28, and the second pole of the fourth permanent magnet 64 faces away from the third permanent magnet 63 in the stacking direction 28.

As can be seen, the magnetic pole orientation of the first permanent magnet 61 is opposite to the magnetic pole orientation of the third permanent magnets 63 and the second permanent magnet 62, and is the same as the magnetic pole orientation of the fourth permanent magnet 64. When the first electrode frame 21 and the second electrode frame 22 are not aligned with each other in the correct orientation, the first permanent magnet 61 and the fourth permanent magnet 64 (it should be understood that this can be one or more sets of magnets thereof) may be aligned with each other in the stacking direction 28, and/or the second permanent magnet 62 and the third permanent magnet 63 (it should be understood that this can be one or more sets of magnets thereof) may be aligned with each other in the stacking direction 28. In this instance, the first permanent magnet 61 and the fourth permanent magnet 64 are magnetically repelled from each other, and/or the second permanent magnet 62 and the third permanent magnet 63 are magnetically repelled from each other. Such magnetic repulsion would prevent the first electrode frame 21 and the second electrode frame 22 from approaching each other, thereby preventing the first electrode frame 21 and the second electrode frame 22 from being placed in the wrong orientation. When the first electrode frame 21 and the second electrode frame 22 are aligned with each other in the correct orientation (or otherwise a desired orientation), the first permanent magnet 61 and the second permanent magnet 62 are aligned with each other in the stacking direction 28, and the third permanent magnet 63 and the fourth permanent magnet 64 are aligned with each other in the stacking direction 28. In this instance, the first permanent magnet 61 and the second permanent magnet 62 are magnetically attracted to each other, and the third permanent magnet 63 and the fourth permanent magnet 64 are magnetically attracted to each other. This magnetic attraction brings the first electrode frame 21 and the second electrode frame 22 closer to each other and holds them together reliably. This configuration, in which each of the first magnetic attraction portion and the second magnetic attraction portion includes permanent magnets with oppositely oriented magnetic poles, prevents the first electrode frame 21 and the second electrode frame 22 from being aligned in the wrong orientation relative to each other, and provides precise alignment between the first electrode frame 21 and the second electrode frame 22. Such a configuration can significantly improve the precision of assembly between the first electrode frame 21 and the second electrode frame 22, thereby further facilitating the manufacture, assembly, and maintenance of the aforementioned integral component, the electrolytic unit 20, and the electrolytic apparatus 10 including such an electrolytic unit 20.

As shown in FIG. 2, the first pole of each first permanent magnet 61 may face the second electrode frame 22, and the second pole may face the second electrode frame 22. The second pole of each second permanent magnet 62 may face the second electrode frame 22, and the first pole may face the second electrode frame 22. The second pole of each third permanent magnet 63 may face the second electrode frame 22, and the first pole may face the second electrode frame 22. The first pole of each fourth permanent magnet 64 may face the first electrode frame 21, and the second pole may face the first electrode frame 21.

In some embodiments, the plurality of first permanent magnets 61 and third permanent magnets 63 may be arranged in a first arrangement pattern, and the plurality of second permanent magnets 62 and fourth permanent magnets 64 may be arranged in a second arrangement pattern. The first arrangement pattern and the second arrangement pattern may match each other such that the first electrode frame 21 and the second electrode frame 22 are maintained as an integral structure in relative unique orientation to each other. The arrangement pattern of the permanent magnets may include, but is not limited to, the number, shape, relative position (including sorting), or combination thereof of the permanent magnets. That is, the first and second arrangement patterns may be matched to each other such that the plurality of first permanent magnets 61 and third permanent magnets 63 and the plurality of second permanent magnets 62 and fourth permanent magnets 64 are able to hold the first electrode frame 21 and the second electrode frame 22 together in that unique orientation relative to each other. Alternatively, the first and second arrangement patterns may be matched to each other such that each first permanent magnet 61 is aligned with a corresponding second permanent magnet 62 in the stacking direction 28 and each third permanent magnet 63 is aligned with a corresponding fourth permanent magnet 64 in the stacking direction 28 only when the first electrode frame 21 and the second electrode frames 22 are aligned with each other in this unique orientation, thereby retaining the first electrode frame 21 and the second electrode frame 22 together. Conversely, when the first electrode frame 21 and the second electrode frame 22 are aligned with each other in other orientations that deviate from this unique orientation, some or all of the plurality of first permanent magnets 61 and third permanent magnets 63 will not be able to be aligned with the corresponding permanent magnets of the plurality of second permanent magnets 62 and fourth permanent magnets 64 in the stacking direction 28, and even the aforementioned magnetic repulsion will occur between the permanent magnets of these two electrode frames, resulting in the inability to hold the first electrode frame 21 and the second electrode frame 22 together. Accordingly, such a configuration can provide for precise alignment between the first electrode frame 21 and the second electrode frame 22, thereby significantly improving the accuracy of assembly between the first electrode frame 21 and the second electrode frame 22.

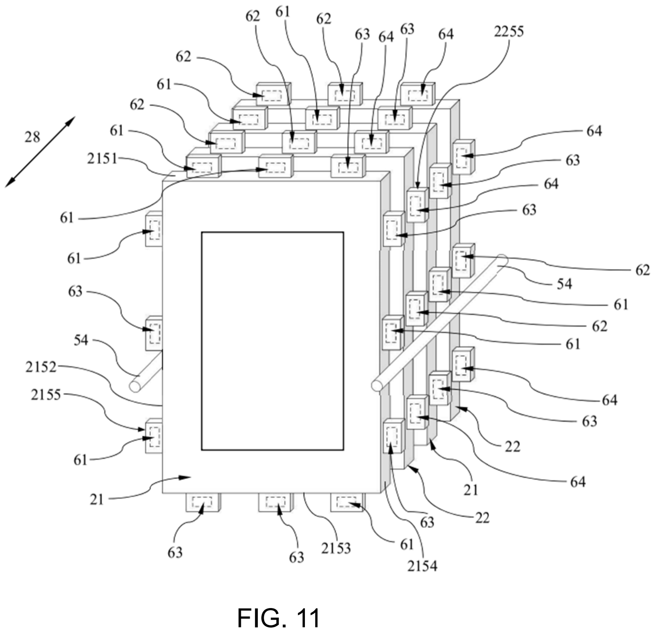

As one example, as shown in FIGS. 4A to 4B and 11, for the first electrode frame 21, three permanent magnets may be disposed adjacent to or at each of the first wall section 2151, the second wall sections 2152, the third wall sections 2153, and the fourth wall section 2154. For these wall sections 2151 to 2154, the number and sequencing of the first permanent magnet 61 and the third permanent magnet 63 are different from each other. For example, in the counterclockwise direction in FIG. 11, the three permanent magnets disposed sequentially adjacent to the first wall section 2151 or at the first wall section 2151 may be the third permanent magnet 63, the first permanent magnet 61, and the first permanent magnet 61; the three permanent magnets disposed sequentially adjacent to the second wall section 2152 or at the second wall section 2152 may be the first permanent magnet 61, the third permanent magnet 63, and the first permanent magnet 61; the three permanent magnets disposed sequentially adjacent to the third wall section 2153 or at the third wall section 2153 may be the third permanent magnet 63, the third permanent magnet 63, and the first permanent magnet 61; and the three permanent magnets disposed sequentially adjacent to the fourth wall section 2154 or at the fourth wall section 2154 may be the third permanent magnet 63, the first permanent magnet 61, and the third permanent magnet 63. For the second electrode frame 22, three permanent magnets may be correspondingly disposed adjacent to or at each wall section to mate with the corresponding permanent magnets of the first electrode frame 21 to provide a magnetic attraction between the second electrode frame 22 and the first electrode frame 21. For example, the three permanent magnets disposed sequentially adjacent to, or at the wall section of the second electrode frame 22 corresponding to the first wall section 2151 of the first electrode frame 21 are the fourth permanent magnet 64, the second permanent magnet 62, and the second permanent magnet 62. Due to this arrangement pattern of the permanent magnets of the first electrode frame 21 and the second electrode frame 22, the first electrode frame 21 and the second electrode frame 22 can be held together in a unique orientation relative to each other.

It will be understood that the specific form of the first arrangement pattern and the second arrangement pattern are not to be so limited. More particularly, the first arrangement pattern and the second arrangement pattern may be configured in any suitable form, including the number, shape, relative position (including sequencing) of the permanent magnets, or combinations thereof, such that the first electrode frame 21 and the second electrode frame 22 are held together in a unique orientation relative to each other. For example, each of the electrode frames has two permanent magnets that are opposite in magnetic pole orientation, and the two permanent magnets may be arranged in an asymmetric arrangement pattern with respect to the central axis of the electrode frame parallel to the stacking direction or in any other suitable arrangement pattern. As another example, the number of permanent magnets adjacent to the various wall sections of the electrode frame or at the various wall sections may vary. As another example, the shape of the permanent magnets adjacent to the various wall sections of the electrode frame or at the various wall sections may vary. These are all capable of achieving retaining the first electrode frame 21 and the second electrode frame 22 together in a unique orientation relative to each other. It is also to be understood that the shape of the electrode frame is not so limited and that the first electrode frame 21 and the second electrode frame 22 may still be held together in a unique orientation relative to each other by matching the first arrangement pattern and the second arrangement pattern to each other when the electrode frames have other shapes.

In some embodiments, the plurality of first permanent magnets 61 and third permanent magnets 63 may be alternately arranged around the stack (or opening 213) on the first electrode frame 21, and the plurality of second permanent magnets 62 and fourth permanent magnet 64 may be alternately arranged around the stack (or opening 223) on the second electrode frame 22. Although such an arrangement pattern is not shown in the various views, it is contemplated that these permanent magnets may be arranged adjacent or at the various wall sections of the electrode frame to surround the stack (or opening). Such a configuration provides for precise alignment and uniform retention between the first electrode frame 21 and the second electrode frame 22.

In some embodiments, as shown in FIGS. 6A and 6B, each of the first permanent magnets 61 of the first electrode frame 21 (or alternatively, the portion of the first electrode frame 21 with the first permanent magnet 61) and the corresponding second permanent magnet 62 of the second electrode frame 22 (or alternatively, the portion of the second electrode frame 22 with the second permanent magnet 62) may be spaced apart by a gap G1 in the stacking direction 28. The gap G1 may be sized such that sufficient magnetic attraction is maintained between the first permanent magnet 61 and the corresponding second permanent magnet 62 along the stacking direction 28, while allowing for insertion of a tool between the first permanent magnet 61 and the corresponding second permanent magnet 62 (or alternatively, between the portion of the first electrode frame 21 with the first permanent magnet 61 and the portion of the second electrode frame 22 with the second permanent magnet 62). Operating this tool causes the first permanent magnet 61 and the corresponding second permanent magnet 62 to move away from each other to overcome the magnetic attraction, thus facilitating the separation of the first electrode frame 21 and the second electrode frame 22.

In some examples, the tool may be a lever tool such as a crowbar, which may be operable to cause the first permanent magnet 61 and the corresponding second permanent magnet 62 to move away from each other in the stacking direction 28, thus overcoming the magnetic attraction. In other examples, as shown in FIG. 6B, the tool may include a fifth permanent magnet 65 or may be a fifth permanent magnet 65 having a first magnetic pole (i.e., an S-pole) and a second magnetic pole (i.e., an N-pole). The fifth permanent magnet 65 may be received in the gap G1 and oriented such that its first magnetic pole and the second magnetic pole are opposite to each other in the stacking direction 28, wherein the first magnetic pole of the fifth permanent magnet 65 faces the first magnetic pole of the first permanent magnet 61 and the second magnetic pole of the fifth permanent magnet 65 faces the second magnetic pole of the second permanent magnet 62. In this instance, the fifth permanent magnet 65 would separate the corresponding first permanent magnet 61 and the second permanent magnet 62 and create magnetic repulsion between the first permanent magnet 61 and the second permanent magnet 62, thereby causing the first permanent magnet 61 and the second permanent magnet 62 to disengage from magnetic attraction. This mating of the gap G1 with the fifth permanent magnet 65 enables easy separation of the first electrode frame 21 and the second electrode frame 22 that have been assembled together. It will be understood that the gap G1 may also be configured to allow the first permanent magnet 61 and the corresponding second permanent magnet 62 to be moved manually away from each other in the stacking direction 28, so as to overcome the magnetic attraction therebetween.

Although not shown in the various views, it should be understood that where the first electrode frame 21 and the second electrode frame 22 respectively include a third permanent magnet 63 and a fourth permanent magnet 64, each third permanent magnet 63 may also be spaced apart from the corresponding fourth permanent magnet 64 in the stacking direction 28 by a gap similar to the gap G1. The gap may provide similar functionality. For example, the gap may be configured for receiving a sixth permanent magnet (not shown). The sixth permanent magnet has a first magnetic pole and a second magnetic pole, and is oriented such that the first magnetic pole and the second magnetic pole are opposite to each other in the stacking direction 28, wherein the second magnetic pole of the sixth permanent magnet faces the second magnetic pole of the third permanent magnet 63, and the first magnetic pole of the sixth permanent magnet faces the first magnetic pole of the fourth permanent magnet 64.

In some embodiments, as shown in FIGS. 4A, 4B, 6A, and 11, the first electrode frame 21 may include a lug 2155 protruding outward (e.g., along a lateral direction) from the wall sections 2151 to 2154 of the outer wall 215. The permanent magnets 61 and 63 of the first magnetic attraction portion of the first electrode frame 21 may be disposed in a corresponding lug 2155. For example, the permanent magnet may be molded or inserted in the lug 2155, or disposed in any other suitable manner in the lug 2155. Similarly, as shown in FIG. 11, the second electrode frame 22 may include a lug 2255 protruding outward (e.g., along a lateral direction) from the outer wall 225. The permanent magnets 62 and 64 of the second magnetic attraction portion of the second electrode frame 22 may be disposed in a corresponding lug 2255. For example, the permanent magnet may be molded or inserted in the lug 2255 or disposed in any other suitable manner in the lug 2255. The aforementioned gap G1 may be located between the lug 2155 and the lug 2255.

By disposing the permanent magnets in the lugs, the electrode frame can be provided with a magnetic attraction portion without changing the original design of the electrode frame (e.g., sealing design) and without significantly increasing the size and the manufacturing material of the electrode frame (therefore, the weight of the electrode frame is not significantly increased). Further, in some embodiments, as schematically shown in FIG. 11, some of the lugs 2155 and 2255 may serve as mounting guides. As will be described in detail below, when the electrolytic unit 20 and the electrolytic apparatus 10 are assembled, the lugs 2155 and 2255 may be mounted on a guide lever, such as a connecting lever 54 of the grip 50, or other suitable guides, to aid in aligning the electrode frames with each other or to aid in aligning the various electrolytic units 20 with each other. It will be understood that the lugs 2155 and 2255 are not limited to having the illustrated shape but may have any suitable shape.

In some embodiments, the lug 2155 of the first electrode frame 21 may be integrally formed with the first electrode frame 21 (e.g., by a molding process). Such a configuration can increase the overall integrity of the first electrode frame 21 and reduce the number of components. In other embodiments, the lug 2155 of the first electrode frame 21 may be formed separately from the first electrode frame 21 and attached to the first electrode frame 21. Such a configuration may improve the manufacturing flexibility of the first electrode frame 21. For example, the lug 2155 of the first electrode frame 21 may be removably attached (e.g., through a mating structure such as a catch, latch, etc.) to the first electrode frame 21. Such a configuration can facilitate the mounting of the permanent magnets to the first electrode frame 21 and the disassembly of the permanent magnets from the first electrode frame 21. Moreover, such a configuration can also facilitate the adjustment of the orientation of the permanent magnets, such as by flipping the magnetic pole orientation of the permanent magnets, thereby separating the electrode frames using magnetic repulsion between the permanent magnets. As another example, the lug 2155 of the first electrode frame 21 may be non-removably attached (e.g., by bonding) to the first electrode frame 21.

Similar to the lug 2155 of the first pole frame 21, the lug 2255 of the second electrode frame 22 may also be formed in a similar manner. For the sake of brevity, the details of the similar content will not be repeated.

Although the description above has described an exemplary configuration of the first magnetic attraction portion and the second magnetic attraction portion in which the first magnetic attraction portion of the first electrode frame 21 includes a plurality of first permanent magnets 61 and a plurality of third permanent magnets 63, and the second magnetic attraction portion of the second electrode frame 22 includes a plurality of second permanent magnets 62 and a plurality of fourth permanent magnets 64, it should be understood that the types and numbers of permanent magnets in the first magnetic attraction portion and the second magnetic attraction portion are not limited thereto. For example, the first magnetic attraction portion may include only one first permanent magnet 61 and one third permanent magnet 63, and the second magnetic attraction portion accordingly includes only one second permanent magnet 62 and one fourth permanent magnet 64. As another example, the first magnetic attraction portion may include only the first permanent magnet 61, and the second magnetic attraction portion correspondingly includes only the second permanent magnet 62.

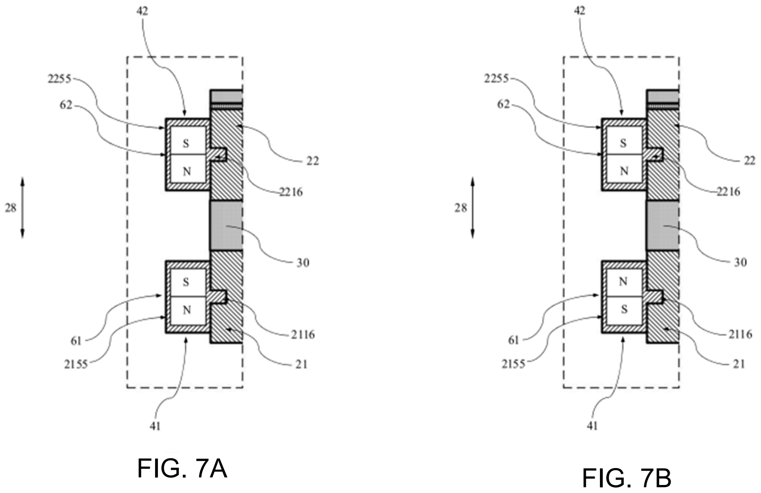

FIGS. 7A to 10 are respectively magnified views similar to that of FIG. 6A, but show four selectable variants of the electrode frame that may be used in the electrolytic unit 20 of FIG. 2. For the same or similar portions of these electrode frames, the same or similar portions of these selectable electrode frames will be indicated in FIGS. 7A to 10 by reference numerals that are designated to the portions of the electrode frames 21 and 22 in FIGS. 2 to 6B. For brevity, details of these same or similar portions will not be repeated, and the unique features of these optional electrode frames will be highlighted below.

Unlike the configuration of the magnetic attraction portion of the electrode frame shown in FIGS. 2, 6A, and 6B, in some embodiments, the electrode frame may be configured such that the orientation of the first pole and the second pole of the permanent magnet is flippable. For example, the electrode frame may be configured such that the orientation of the first pole and the second pole of the permanent magnet in the stacking direction 28 is flippable.

In one of these embodiments, as shown in FIGS. 7A and 7B, each of the lugs 2155 of the first pole frame 21 and the lugs 2255 of the second pole frame 22 is configured to be flippable, so that the orientation of the first and second poles of the permanent magnets flippably disposed in the lugs 2155 and 2255 in the stacking direction 28 can be flipped. For example, each of the lugs 2155 and 2255 may be pivotally attached to the corresponding electrode frames 21 and 22 by pivot axes 2116 and 2216, respectively, to enable the lug to be flipped relative to the electrode frame such that the orientations of the first and second poles of the permanent magnets disposed in the lugs in the stacking direction 28 can be flipped. Similar to what is shown in FIG. 6A, as shown in FIG. 7A, the first pole of the first permanent magnet 61 and the second pole of the second permanent magnet 62 face each other. The second pole of the first permanent magnet 61 faces away from the second permanent magnet 62 in the stacking direction 28, and the first pole of the second permanent magnet 62 faces away from the first permanent magnet 61 in the stacking direction 28. In this instance, the first permanent magnet 61 and the second permanent magnet 62 are magnetically attracted to each other to detachably retain the first electrode frame 21 and the second electrode frame 22 as an integral structure. As shown in FIG. 7B, the lug 2155 of the first electrode frame 21 is flipped such that the orientations of the first and second poles of the first permanent magnet 61 in the stacking direction 28 are flipped, causing the second pole of the first permanent magnet 61 and the second pole of the second permanent magnet 62 to face each other. In this instance, the first permanent magnet 61 and the second permanent magnet 62 are magnetically repelled from one another. With this configuration, the first electrode frame 21 and the second electrode frame 22 that have been assembled together can be easily separated. It should be understood that the lug 2255 of the second electrode frame 22 may be flipped in a similar manner. It should also be understood that only one of the lugs 2155 and 2255 may be configured to be flippable.

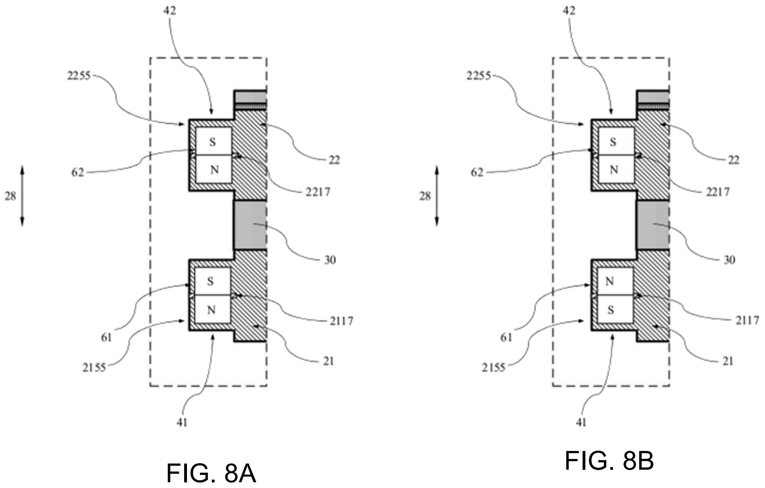

In another one of these embodiments, as shown in FIGS. 8A and 8B, each of the first permanent magnet 61 and the second permanent magnet 62 is configured to be capable of flipping in a corresponding lug such that the orientation of the first magnetic pole and the second magnetic pole of the permanent magnet in the stacking direction 28 can be flipped. For example, each of the first permanent magnet 61 and the second permanent magnet 62 may be pivotally disposed in corresponding lugs by pivot axes 2117 and 2217, respectively, to enable the permanent magnet to be flipped relative to the corresponding lug, thereby enabling the orientation of the first and second poles of the permanent magnet in the stacking direction 28 to be flipped. Similar to what is shown in FIG. 6A, as shown in FIG. 8A, the first pole of the first permanent magnet 61 and the second pole of the second permanent magnet 62 face each other. The second pole of the first permanent magnet 61 faces away from the second permanent magnet 62 in the stacking direction 28, and the first pole of the second permanent magnet 62 faces away from the first permanent magnet 61 in the stacking direction 28. In this instance, the first permanent magnet 61 and the second permanent magnet 62 are magnetically attracted to each other to detachably retain the first electrode frame 21 and the second electrode frame 22 as an integral structure. As shown in FIG. 8B, the first permanent magnet 61 is flipped such that the orientations of the first and second poles in the stacking direction 28 are flipped, causing the second pole of the first permanent magnet 61 and the second pole of the second permanent magnet 62 to face each other. In this instance, the first permanent magnet 61 and the second permanent magnet 62 are magnetically repelled from one another. With this configuration, the first electrode frame 21 and the second electrode frame 22 that have been assembled together can be easily separated. It should be understood that the second permanent magnet 62 may be flipped in a similar manner. It should also be understood that it is possible to configure only one of the first permanent magnet 61 and the second permanent magnet 62 to be flippable.

It will be understood that any suitable retaining mechanism may be provided to retain the aforementioned flippable lugs and flippable permanent magnets in a releasable manner to avoid them being inadvertently flipped. It is also to be understood that the flippable design of the magnetic attraction portion of the electrode frame is not to be so limited, but may be in any suitable form.

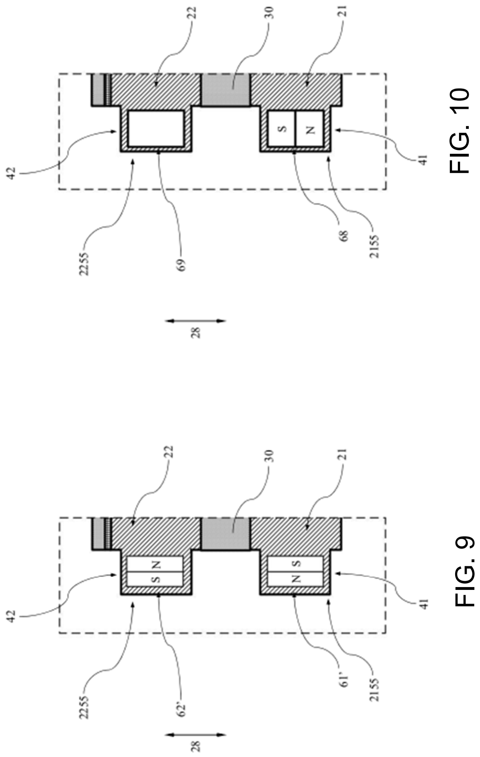

While the above described various permanent magnets are oriented such that their first poles and second poles are opposite to each other in the stacking direction 28, it should be understood that the orientation of the permanent magnets is not so limited. In other embodiments, the permanent magnets may be oriented such that the first poles and the second poles are opposite to each other in a lateral direction perpendicular to the stacking direction 28. As shown in FIG. 9, each of the first permanent magnet 61' and the second permanent magnet 62' has a first magnetic pole (i.e., an S-pole) and a second magnetic pole (i.e., an N-pole) and is oriented such that the first magnetic pole and the second magnetic pole are opposite to one another in a lateral direction perpendicular to the stacking direction 28. Each first permanent magnet 61' and the corresponding second permanent magnet 62' align with one another in the stacking direction 28 such that the first magnetic pole of the first permanent magnet 61' and the second magnetic pole of the second permanent magnets 62' face each other in the stacking direction, and the second magnetic pole of the first permanent magnet 61' and the first magnetic pole of the second permanent magnets 62' face each other in the stacking direction. Such a configuration may prevent the first electrode frame 21 and the second electrode frame 22 from being aligned with each other in an incorrect orientation, and provide for precise alignment between the first electrode frame 21 and the second electrode frame 22. Such a configuration can significantly improve the precision of assembly between the first electrode frame 21 and the second electrode frame 22, thereby further facilitating the manufacture, assembly, and maintenance of the aforementioned integral component, the electrolytic unit 20, and the electrolytic apparatus 10 including such an electrolytic unit 20.

It will be understood that the first permanent magnet 61' and the second permanent magnet 62' may also be disposed in lugs of the electrode frame in a manner similar to that described above. In addition, a flip mechanism may also be provided in the embodiment shown in FIG. 9 such that the orientation of the first magnetic pole and the second magnetic pole of at least one of the first permanent magnet 61' and the second permanent magnet 62' in the lateral direction can be flipped. It can be envisioned that reversing the orientation of the first pole and the second pole of the first permanent magnet 61' or the second permanent magnet 62' in the lateral direction may cause the first permanent magnet 61' and the second permanent magnet 62' to repel each other magnetically. With this configuration, the first electrode frame 21 and the second electrode frame 22 that have been assembled together can be easily separated.

Further, it is contemplated that the first permanent magnet 61' and the second permanent magnet 62' may also be spaced apart in the stacking direction 28 by a gap similar to the gap G1, thereby separating the first electrode frame 21 and the second electrode frame 22 in a manner similar to that described above.

Although the above description, in conjunction with FIGS. 2 to 9, describes embodiments in which both the first magnetic attraction portion and the second magnetic attraction portion include permanent magnets, it should be understood that the present application is not limited thereto, and in other embodiments, only one of the first magnetic attraction portion and the second magnetic attraction portion includes a permanent magnet.

In particular, as shown in FIG. 10, the first magnetic attraction portion includes a permanent magnet 68, while the second magnetic attraction portion includes a magnetizable portion 69. For example, the magnetizable portion 69 may be made of a soft magnetic material. Soft magnetic materials refer to materials that do not "remember" a magnetic field state themselves, but instead completely follow changes in an external magnetic field. They quickly reach magnetic saturation under the influence of the external magnetic field and demagnetize almost completely after the external magnetic field is removed. The permanent magnet 68 aligns with the magnetizable portion 69 in the stacking direction 28 and magnetizes the magnetizable portion 69. With this configuration, the first magnetic attraction portion and the second magnetic attraction portion can be magnetically attracted to each other, thereby removably retaining the first electrode frame 21 and the second electrode frame 22 together.

Although only one permanent magnet 68 and a corresponding magnetizable portion 69 are shown in FIG. 10, it should be understood that the first magnetic attraction portion may include a plurality of permanent magnets 68 and the second magnetic attraction portion correspondingly includes a plurality of magnetizable portions 69. Each of the permanent magnets 68 is aligned with a corresponding magnetizable portion 69 in the stacking direction 28 and magnetizes the magnetizable portion 69. In some examples, the plurality of magnetizable portions 69 may be spaced apart using non-magnetizable portions (not shown). With this configuration, when the first electrode frame 21 and the second electrode frame 22 are not aligned with one another in the stacking direction 28 in a correct orientation, the permanent magnet 68 is aligned with a non-magnetizable portion in the stacking direction 28, thereby failing to generate magnetic attraction therebetween. Such a configuration may prevent the first electrode frame 21 and the second electrode frame 22 from being aligned with each other in an incorrect orientation, and provide for precise alignment between the first electrode frame 21 and the second electrode frame 22. It is contemplated that the permanent magnet 68 and the magnetizable portion 69 may also be disposed in the lugs of the electrode frame in a manner similar to that described above, and the non-magnetizable portion may be a gap between the lugs.

Although the above description shows the magnetic attraction portion of the electrode frame being provided at the lug, it should be understood that the present application is not limited thereto, and in other embodiments, the magnetic attraction portion can be provided at any suitable position of the electrode frame. For example, the magnetic attraction portion may be disposed in the electrode frame adjacent to an outer wall of the electrode frame. It should also be understood that where the magnetic attraction portion is disposed at other locations of the electrode frame, the orientation of the first pole and the second pole of the permanent magnet may also be flippable.

Although the above description illustrates embodiments where at least one of the first magnetic attraction portion and the second magnetic attraction portion includes a permanent magnet, it should be understood that the present application is not limited thereto, and in other embodiments, neither the first magnetic attraction portion nor the second magnetic attraction portion may include a permanent magnet. For example, the first magnetic attraction portion and the second magnetic attraction portion may be an integral portion of the electrode frame, respectively, and these portions are magnetized to magnetically attract each other, thereby removably retaining the first electrode frame 21 and the second electrode frame 22 together.

Although the first retaining portion 41 and the second retaining portion 42 described above are magnetic portions, respectively, to removably retain the first electrode frame 21 and the second electrode frame 22 together, it should be understood that the present application is not so limited, and in other embodiments, the first retaining portion 41 and the second retaining portion 42 may also be in any other suitable form (e.g., snap, threaded connection, etc.) to removably retain the first electrode frame 21 and the second electrode frame 22 together.

Further, although the first retaining portion 41 and the second retaining portion 42 described above removably hold the first electrode frame 21 and the second electrode frame 22 together, it is to be understood that the present application is not so limited and in other embodiments, the first retaining portion 41 and the second retaining portion 42 may hold the first electrode frame 21 and the second electrode frame 22 together in a non-removable manner (i.e., permanently).

Referring back to FIG. 1, the electrolytic apparatus 10 comprises a plurality of electrolytic units 20 and a grip 50. Each of the electrolytic units 20 may include the aforementioned integral component (i.e., the first electrode frame 21, the second electrode frame 22, the aforementioned stack and the seal 30, and optionally a plate 31 and a seal 32). The plurality of electrolytic units 20 are stacked along the stacking direction 28. As shown schematically in FIGS. 1 and 11, for each of the electrolytic units 20, the first magnetic attraction portion of the first electrode frame 21 of the electrolytic unit 20 is adjacent to and magnetically attracted to the second magnetic attraction portion of the second electrode frame 22 of an adjacent electrolytic unit 20, and the second magnetic attraction portion of the second electrode frame 22 of the electrolytic unit 20 is adjacent to and magnetically attracted to the first magnetic attraction portion of the first electrode frame 21 of another adjacent electrolytic unit 20. With this configuration, an initial retaining force can be provided between the plurality of electrolytic units 20 to hold them together. As will be described specifically below, the grip 50 may further provide a retention force to reliably hold these electrolytic units 20 together. It can be envisioned that the two adjacent magnetic attraction portions of two adjacent electrolytic units 20 can also be designed to be spaced apart in the stacking direction 28 by a gap similar to the gap G1.

The grip 50 may comprise a first end plate 51, a second end plate 52, and a third end plate 53. The second end plate 52 is disposed between the first end plate 51 and the third end plate 53 in the stacking direction 28. The grip 50 may also comprise a plurality of connecting rods 54 connecting the first end plate 51, the second end plate 52, and the third end plate 53. The first end plate 51 and the third end plate 53 are fixed relative to each other by the connecting rods 54. That is, the first end plate 51 and the third end plate 53 are both fixed end plates. The second end plate 52 is slidable relative to the first end plate 51 and the third end plate 53 along the stacking direction 28 on the connecting rods 54. That is, the second end plate 52 is a movable end plate. The first end plate 51 and the second end plate 52 are configured to hold the stacking formed by the plurality of electrolytic units 20 therebetween in the stacking direction 28, so as to keep the plurality of electrolytic units 20 together. The grip 50 may further comprise a device 55 configured to drive the second end plate 52 to move relative to the first end plate 51 in the stacking direction 28. In this way, the device 55 may apply pressure to the second end plate 52 such that the second end plate 52 and the first end plate 51 exert a clamping force on the stacking of electrolytic units 20 located therebetween, thereby reliably holding the plurality of electrolytic units 20 together. The device 55 may adjust the clamping force applied to the stacking of electrolytic units 20 by adjusting the position of the second end plate 52 relative to the first end plate 51 in the stacking direction 28. The grip 50 may also be referred to as a "holding mechanism" or a "holding device."

This configuration of the grip 50 of the electrolytic apparatus 10 makes it easier to install the electrolytic unit 20 into the electrolytic apparatus 10 and remove and replace the electrolytic unit 20 from the electrolytic apparatus 10, thereby significantly improving the maintenance efficiency of the electrolytic apparatus 10 and reducing its maintenance costs.

It is contemplated that in some embodiments, the hydrogen side outlet, the oxygen side outlet, and the inlet of the electrolytic apparatus 10 are all disposed at the first end plate 51. It should be understood that the present application is not limited thereto, and in other examples, one or more of the hydrogen side outlet, the oxygen side outlet, and the inlet of the electrolytic apparatus 10 may be provided at the second end plate 52.

In some examples, the device 55 may be a hydraulic drive device, fixed to the third end plate 53, and hydraulically driving the second end plate 52 to move relative to the first end plate 51 in the stacking direction 28. The use of the hydraulic drive device provides a reliable clamping force and allows for precise adjustment of the clamping force. Furthermore, the maintenance cost of a hydraulic drive device is low. It should be understood that in other examples, any other suitable type of device may be used to adjust the position of the second end plate 52 relative to the first end plate 51 in the stacking direction 28, thereby adjusting the clamping force applied by the first end plate 51 and the second end plate 52 to the stacking of the electrolytic unit 20.

In some examples, as shown in FIG. 1, thanks to the integrated component design of the electrolytic unit 20 and the aforementioned configuration of the grip 50, the plurality of electrolytic units 20 of the electrolytic apparatus 10 may be stacked horizontally. In other words, the stacking direction 28 may be horizontally oriented relative to the direction of gravity. As described in the Background, in conventional electrolytic apparatuses, the components are held together by pressure. More specifically, in conventional electrolytic apparatuses, the individual electrolytic units must be stacked one on top of the other along the direction of gravity. This results in conventional electrolytic apparatuses having a very high vertical height (e.g., reaching 5 meters or more), and their assembly and maintenance are time-consuming and labor-intensive. Compared to conventional electrolytic apparatuses, since the stacking direction 28 in the electrolytic apparatus 10 according to the present application is horizontally oriented relative to the direction of gravity, the electrolytic apparatus 10 can have a significantly reduced vertical height and can be easily assembled and maintained.

In other examples, the stacking direction 28 may also be oriented parallel to the direction of gravity. In this case, the electrolytic apparatus 10 can still be easily assembled and maintained.

Although the method described herein is to connect the first end plate 51, the second end plate 52, and the third end plate 53 using several connecting rods 54, it should be understood that any other type of structure may be used to achieve the fixation of the first end plate 51 and the third end plate 53 and to allow the second end plate 52 to move relative to the first end plate 51 in the stacking direction 28.

Furthermore, although the third end plate 53 is described herein as a fixed end plate, and the device 55 (e.g., a hydraulic drive device) is fixed to the third end plate 53, it should be understood that the third end plate 53 is merely one example of a fixing structure, and the present application is not limited thereto. In other examples, any other suitable fixing structure may be used to fix the first end plate 51 and the device 55.

The inventors have recognized and realized the method for manufacturing the electrolytic unit 20. In particular, the stack and the seal 30 (and optionally the plate 31) formed by the first porous transmission layer 23, the first electrode layer 24, the membrane 25, the second electrode layer 26, and the second porous transmission layer 27 being stacked in sequence along the stacking direction 28 may first be disposed between the first electrode frame 21 and the second electrode frame 22, and then the first electrode frame 21 and the second electrode frame 22 are retained as an integral structure by the first retaining portion 41 and the second retaining portion 42 (optionally, the seal 32 is disposed on the second electrode frame 22). In this way, the first electrode frame 21, the second electrode frame 22, the stack and the seal 30 can be formed as an integral component, i.e., a single piece overall structure.

The inventors have also recognized and realized the method for manufacturing the electrolytic apparatus 10. Specifically, as shown in FIG. 1, a plurality of electrolytic units 20 may be disposed between the second end plate 52 and the first end plate 51 of the grip 50 along the stacking direction 28. With the retaining portion being a magnetic attraction portion, magnetic attraction between the magnetic attraction portions of the adjacent electrolytic units 20 is capable of providing an initial retaining force between the electrolytic units 20. Subsequently, the second end plate 52 may be driven by the control device 55 to move toward the first end plate 51 in the stacking direction 28 to increase the clamping force exerted by the second end plate 52 and the first end plate 51 on the plurality of electrolytic units 20, thereby reliably holding them in place. That is, for each electrolytic unit 20, during assembly of the electrolytic units 20 to the electrolytic apparatus 10, the first electrode frame 21 and the second electrode frame 22 are held together by the first retaining portion 41 and the second retaining portion 42 to apply a clamping force that holds the aforementioned stack and the seal 30 in the electrolytic unit 20 between the second end plate 52 and the first end plate 51. In the assembled electrolytic apparatus 10, the clamping force of the first electrode frame 21 and the second electrode frame 22 on the stack and the seal 30 is further applied by the grip 50.

The inventors have also recognized and realized a method for disassembling and maintaining the electrolytic apparatus 10. Specifically, the second end plate 52 may be moved away from the first end plate 51 in the stacking direction 28 by the control device 55 to reduce the clamping force exerted by the second end plate 52 and the first end plate 51 on the plurality of electrolytic units 20, thereby allowing the electrolytic units 20 that need to be replaced to be removed from the electrolytic apparatus 10. The adjacent electrolytic units 20 may be separated from each other by the aforementioned tool or flip mechanism. Subsequently, a new electrolytic unit 20 may be quickly installed into the electrolytic apparatus 10 and the clamping force may be reapplied to hold the plurality of electrolytic units 20 together, so that the electrolytic apparatus 10 may be restored to operation. The replaced electrolytic units 20 may then be returned to the factory for repair. With the retaining portion removably holding the electrode frame together, the removed electrolytic unit 20 may be detached for repair.

Although the first electrode frame 21 and the second electrode frame 22 are described above in shape of a generally rectangular frame, respectively, it should be understood that the shape of the first electrode frame 21 and the second electrode frame 22 are not so limited, but may have any suitable shape, such as a circular ring.

While the above description provides an example where the first electrode frame 21 is an anodic frame and the second electrode frame 22 is a cathodic frame, describing the configuration of the component, the electrolytic unit 20 and the electrolytic apparatus 10 as well as methods of manufacturing, assembly, and maintenance, it should be understood that the type of the electrode frame is not so limited, and in other embodiments, the first electrode frame 21 may be a cathodic frame and the second electrode frame 22 may accordingly be an anodic frame. In this instance, the first porous transmission layer 23 and the first electrode layer 24 are a cathodic porous transmission layer and a cathodic electrode layer, respectively, and the second porous transmission layer 27 and the second electrode layer 26 are an anodic porous transmission layer and an anodic electrode layer, respectively.

Furthermore, although the electrolytic unit 20 is described herein for electrolyzing water in an alkaline electrolyte, it should be understood that the integral component, the electrolytic unit 20 and the electrolytic apparatus 10, or variations thereof, according to the present application can be used in other types of electrolytic systems, such as PEM electrolytic systems, AEM electrolytic systems, etc. In the application of the electrolytic unit 20 in a PEM electrolytic system, the membrane 25 is a proton exchange membrane. In the application of the electrolytic unit 20 in an AEM electrolytic system, the membrane 25 is an anion exchange membrane. Furthermore, the configuration of the inlet manifold channel and the outlet manifold channel may be changed accordingly.

In the present application, the terms "first," "second," etc. are used solely to distinguish one component or portion from another and are not intended to limit these components or portions in any way.

The present application has been described in detail in conjunction with specific examples. It is evident that the above description and the examples illustrated in the accompanying drawings are to be understood as exemplary and not as limiting the present application. Those skilled in the art may make various modifications or alterations without departing from the spirit of the present application, and such modifications or alterations are not to be excluded from the scope of the present application.

## Claims

1. A component for an electrolytic apparatus (10), comprising:
a stack formed by a first porous transmission layer (23), a first electrode layer (24), a membrane (25), a second electrode layer (26), and a second porous transmission layer (27) stacked in sequence along a stacking direction (28);
a seal (30) disposed about the stack in a lateral direction perpendicular to the stacking direction; and
a first electrode frame (21) including a first retaining portion (41) and a second electrode frame (22) including a second retaining portion (42), the first retaining portion mating with the second retaining portion to maintain the first electrode frame and the second electrode frame as an integral structure such that the first electrode frame and the second electrode frame retain the stack and the seal therebetween;
wherein the first electrode frame further comprises a first opening (213) extending along the stacking direction through the first electrode frame and having a first interior wall (214), the first porous transmission layer being at least partially disposed in the first opening and having a first side edge (231), the first side edge mating with the first interior wall in a shape-locked manner such that the first porous transmission layer is retained by the first electrode frame.

2. The component according to Claim 1, wherein:
the first interior wall includes a first surface (214a) and a first tab (216) that protrudes from the first surface into the first opening, and the first side edge is supported by the first tab in the stacking direction.

3. The component according to Claim 2, wherein:
the first tab is a stepped tab having a top surface (216a) facing the stacking direction or a ramped tab having a ramped surface (216b) inclined relative to the stacking direction, and the first side edge is supported in the stacking direction by the top surface or the ramped surface; and/or
the first tab is a continuous annular tab surrounding the first porous transmission layer, or includes a plurality of tab segments spaced around the first porous transmission layer.

4. The component according to Claim 2, wherein:
each of the first porous transmission layer and the first electrode layer is disposed integrally in the first opening;
the first interior wall further comprises a first annular groove (217) recessed inwardly in the first electrode frame from a second surface (211) of the first electrode frame facing the second electrode frame in the stacking direction and extending to a bottom surface (217a) of the first annular groove, and recessed inwardly from the first surface into the first electrode frame in the lateral direction and extending to a side surface (217b) of the first annular groove; and
the membrane is at least partially disposed in the first opening and has a second side edge (251) supported by the bottom surface of the first annular groove in the stacking direction.

5. The component according to Claim 4, wherein:
the membrane is disposed integrally in the first opening and a surface (252) of the membrane facing away from the first electrode layer is flush with the second surface of the first electrode frame, the second side edge having a first thickness (T) in the stacking direction;
the first annular groove has a first depth (D) in the stacking direction; and
the first thickness is equal to the first depth.

6. The component according to Claim 5, wherein:
the second electrode frame has a third surface (221) facing the second surface of the first electrode frame; and
the seal is clamped between the second surface and the third surface in the stacking direction and extends inwardly in the lateral direction beyond the side surface of the first annular groove to press against the side edge of the membrane.

7. The component according to Claim 4, wherein:
the second electrode frame further comprises a second opening (223) extending along the stacking direction through the second electrode frame, the second porous transmission layer being at least partially disposed in the second opening; and
the component further comprises a plate (31) retained by the second electrode frame to retain the second porous transmission layer in the second opening.

8. The component according to Claim 7, wherein:
the second electrode frame has a second interior wall (224) comprising a fourth surface (224a) and a second annular groove (227) recessed inwardly from the fourth surface into the second electrode frame in the lateral direction; and
the plate has a third side edge (311) inserted into the second annular groove such that the plate is retained by the second electrode frame.

9. The component according to Claim 7, wherein:
the plate is a bipolar plate; and/or
the seal is a first seal and the component further includes a second seal (32) fixed on a fifth surface (222) of the second electrode frame facing away from the first electrode frame.

10. The component according to any one of Claims 1 to 9, wherein:
the first retaining portion and the second retaining portion detachably retain the first electrode frame and the second electrode frame as an integral structure.

11. The component according to Claim 10, wherein:
the first retaining portion is a first magnetic attraction portion, and the second retaining portion is a second magnetic attraction portion, the first magnetic attraction portion and the second magnetic attraction portion being magnetically attracted to each other to detachably hold the first electrode frame and the second electrode frame together as an integral structure, wherein at least one of the first magnetic attraction portion and the second magnetic attraction portion includes a permanent magnet.

12. The component according to Claim 11, wherein:
the first magnetic attraction portion includes at least one first permanent magnet (61), and the second magnetic attraction portion includes at least one second permanent magnet (62);
each of the at least one first permanent magnet and the at least one second permanent magnet has a first magnetic pole (S) and a second magnetic pole (N), and is oriented such that the first magnetic pole and the second magnetic pole are opposite to each other in the stacking direction; and
each of the at least one first permanent magnet and a corresponding second permanent magnet of the at least one second permanent magnet are aligned with one another in the stacking direction such that the first magnetic pole of each first permanent magnet and the second magnetic pole of the corresponding second permanent magnet face each other.

13. The component according to Claim 12, wherein:
the first magnetic attraction portion further comprises at least one third permanent magnet (63), and the second magnetic attraction portion further comprises at least one fourth permanent magnet (64);
each of the at least one third permanent magnet and the at least one fourth permanent magnet has a first magnetic pole (S) and a second magnetic pole (N), and is oriented such that the first magnetic pole and the second magnetic pole are opposite to each other in the stacking direction; and
each of the at least one third permanent magnet and a corresponding fourth permanent magnet of the at least one fourth permanent magnet are aligned with one another in the stacking direction such that the second magnetic pole of each third permanent magnet and the first magnetic pole of the corresponding fourth permanent magnet face each other.

14. The component according to Claim 13, wherein:
the at least one first permanent magnet and the at least one third permanent magnet are arranged in a first arrangement pattern, and the at least one second permanent magnet and the at least one fourth permanent magnet are arranged in a second arrangement pattern, the first arrangement pattern and the second arrangement pattern matching each other so that the first electrode frame and the second electrode frame are maintained as an integral structure in relative unique orientation to each other; or
the at least one first permanent magnet comprises a plurality of first permanent magnets, the at least one second permanent magnet comprises a plurality of second permanent magnets, the at least one third permanent magnet comprises a plurality of third permanent magnets, and the at least one fourth permanent magnet comprises a plurality of fourth permanent magnets, the plurality of first permanent magnets and the plurality of third permanent magnets being arranged alternately around the stack on the first electrode frame, and the plurality of second permanent magnets and the plurality of fourth permanent magnets being arranged alternately around the stack on the second electrode frame.

15. The component according to Claim 13, wherein:
each first permanent magnet and the corresponding second permanent magnet are spaced apart in the stacking direction by a first gap (G1), which is configured to receive a fifth permanent magnet (65), the fifth permanent magnet having a first magnetic pole and a second magnetic pole and being oriented such that the first magnetic pole and the second magnetic pole are opposite to each other in the stacking direction, wherein the first magnetic pole of the fifth permanent magnet faces the first magnetic pole of the first permanent magnet, and the second magnetic pole of the fifth permanent magnet faces the second magnetic pole of the second permanent magnet; and/or
each third permanent magnet and the corresponding fourth permanent magnet are spaced apart in the stacking direction by a second gap, which is configured to receive a sixth permanent magnet, the sixth permanent magnet having a first magnetic pole and a second magnetic pole and being oriented such that the first magnetic pole and the second magnetic pole are opposite to each other in the stacking direction, wherein the second magnetic pole of the sixth permanent magnet faces the second magnetic pole of the third permanent magnet, and the first magnetic pole of the sixth permanent magnet faces the first magnetic pole of the fourth permanent magnet.

16. The component according to Claim 11, wherein:
the first magnetic attraction portion comprises at least one first permanent magnet (61'), and the second magnetic attraction portion comprises at least one second permanent magnet (62'), each of the at least one first permanent magnet and the at least one second permanent magnet having a first magnetic pole and a second magnetic pole, and is oriented such that the first magnetic pole and the second magnetic pole are opposite to each other in the lateral direction; and
each of the at least one first permanent magnet and a corresponding second permanent magnet of the at least one second permanent magnet are aligned with one another in the stacking direction such that the first pole of the first permanent magnet and the second pole of the corresponding second permanent magnet face each other in the stacking direction, and the second pole of the first permanent magnet and the first pole of the corresponding second permanent magnet face each other in the stacking direction.

17. The component according to any one of Claims 12 to 16, wherein:
the first electrode frame and/or the second electrode frame are configured such that an orientation of the first magnetic pole and the second magnetic pole of a corresponding permanent magnet can be flipped.

18. The component according to Claim 17, wherein:
each of the first and second electrode frames includes a first outer wall opposite the first interior wall and a lug (2155, 2255) protruding outwardly from the first outer wall; and
each of the first permanent magnets is disposed in a corresponding lug of the first electrode frame and each of the second permanent magnets is disposed in a corresponding lug of the second electrode frame.

19. The component according to Claim 18, wherein:
each of the lugs of the first electrode frame and/or the second electrode frame is configured to be flippable such that an orientation of a first magnetic pole and a second magnetic pole of a corresponding permanent magnet disposed in the lug can be flipped; and/or
each of the at least one first permanent magnet and/or at least one second permanent magnet is configured to be able to flip in a corresponding lug such that the orientation of the first magnetic pole and the second magnetic pole of the permanent magnet can be flipped.

20. An electrolytic apparatus (10), comprising:
a plurality of electrolytic units (20), each of the plurality of electrolytic units comprising the component according to any one of Claims 1 to 19, and the plurality of electrolytic units being stacked along the stacking direction (28) and held together.
